# EUROPÄISCHE PATENTSCHRIFT

(11) **EP 0 768 157 B1**
(45) Veröffentlichungstag und Bekanntmachung des Hinweises auf die Patenterteilung: **21.02.2001**
(21) Anmeldenummer: 96115223.8
(22) Anmeldetag: 23.09.1996
(51) Int. Cl.: B29B 13/06, C08F 6/10

(54) **Verfahren zur Trocknung von Polymerpulvern und -agglomeraten**
Process for drying polymer powders and agglomerates
Procédé pour sécher des agglomérats et poudres de polymère

(30) Priorität: 05.10.1995 DE 19537114
(43) Veröffentlichungstag der Anmeldung: 16.04.1997
(73) Patentinhaber: BAYER AG, 51368 Leverkusen (DE)
(72) Erfinder: Wulff, Claus, Dr., 47800 Krefeld (DE); Zaby, Gottfried, Dr., 51375 Leverkusen (DE); Bamberger, Thomas, 47051 Duisburg (DE); Kohlgrüber, Klemens, Dr., 51515 Kürten (DE); Obermann, Hugo DR., 41540 Dormagen (DE); De Vos, Stefaan, 2970 'sGravenwezel (BE); Denecker, Gabriel, Dr., 2920 Heide-Kalmthout (BE); Vaes, Johan, 2920 Kalmthout (BE); Van Osselaer, Tony, 9111 Belsele (BE)

(56) Entgegenhaltungen:
- EP-A- 0 027 700
- EP-A- 0 267 531
- EP-A- 0 300 485
- DE-A- 1 404 237
- US-A- 3 799 234
- US-A- 4 909 898
- US-A- 4 921 909
- US-A- 5 041 249
- US-A- 5 047 188

## Beschreibung

Die Erfindung betrifft ein Verfahren zur Trocknung von thermoplastischen Polymerpulvern und -agglomeraten, insbesondere von aromatischem Polycarbonat (PC) oder anderen thermoplastischen Polymeren, wie z.B. Acrylnitril-Butadien-Styrol Copolymer (ABS), in der Schmelze, bei dem Wasser oder Lösemittel oder beides enthaltene thermoplastische Polymerpulver oder -agglomerate in einem mit rotierenden Einbauten zur Abreinigung der Apparatewände sowie Verteilung und Transport des Trockengutes versehenen Apparat durch Wärmezufuhr über die Wände oder über die rotierenden Einbauten oder beides sowie durch Wärmezufuhr durch Scherung von anhaftender Feuchtigkeit und enthaltenem Lösungsmittel unter Aufschmelzen befreit werden. Dabei wird der Prozeß der Trocknung und der des Aufschmelzens zur nachfolgenden Granulierung kombiniert.

Die Extrusion von ungetrocknetem Polycarbonatpulver aus Isolierprozessen wird in der Offenlegungsschrift EP 300 485 beschrieben. Hierbei wird die Wasserfeuchte des Pulvers mit 0,5 - 10 Gew.-% und der Gehalt an Lösungsmittel mit 0,01 - 5 Gew.-% angegeben. Der Vorteil bei diesem Verfahren besteht in der Reduzierung des Partikelgehalts.

In der Offenlegungsschrift JP 6216905 wird die Extrusion ungetrockneter Pulver zu Mikrogranulaten beschrieben, die sich gut trocknen lassen. Hierbei erfolgt die Trocknung in der festen Phase.

Die Entfernung flüchtiger Verunreinigungen aus Polycarbonatpulvern ohne thermische Schädigung und unter Erhalt guter Farbzahlen gelingt durch Zugabe von 0,1 - 20 Gew.-% Wasser vor der Aufschmelzung in Schneckenextrudern oder Knetern zur Herstellung von Granulaten (siehe z.B. JP 61221225, JP 01249834, JP 60184814).

Die Anwendung von Wasser in einer Polycarbonatschmelze durch Injektion in einen Extruder zur Entfernung flüchtiger Bestandteile aus Polycarbonat und zur Erzielung besserer Farbzahlen beschreiben die Schriften EP 435023 und JP 62294528.

Bei den vorstehend erwähnten Verfahren steht nicht die Trocknung des Polymeren (hier Polycarbonat) im Vordergrund, sondern die Entfernung flüchtiger Verbindungen wie Restlösemittel und die Verwendung von Wasser zur Stabilisierung des Polymeren in der Schmelze.

Die nach diesen Verfahren gewonnenen Polycarbonate weisen jedoch noch nicht ganz befriedigende Restgehalte an Lösemitteln im Polycarbonat auf. Außerdem ist die Trocknung von wasserfeuchtem Pulver in Extrudern oder Knetern bei einem Feuchtigkeitsgehalt von > 5 Gew.-% im Produktionsmaßstab wegen der hohen Brüden-Staudrücke, die in diesen geringvolumigen Apparaten auftreten, mit einer drastischen Absenkung des Mengendurchsatzes verbunden, was solche Verfahren unwirtschaftlich macht.

Im folgenden werden die weiteren technischen Probleme, die bei der Trocknung von feuchten Thermoplasten in Schneckenextrudern auftreten, erläutert:

Das Wasser liegt in den Thermoplasten in der Regel als separate Phase (nicht adsorbiert) in den Poren vor. Bei Erreichung der Verdampfungstemperatur, dies ist z.B. bei den thermoplastischen Polycarbonaten bereits unterhalb der Glastemperatur der Fall, und ausreichender Energiezufuhr verdampft das Wasser quasi schlagartig. Durch die Bildung großer Gasvolumina in kurzer Zeit entsteht in Apparaten, wie z.B. Schneckenextrudern, die ein geringes freies Nutzvolumen und geringere Gasdurchlässigkeit haben, ein hoher Staudruck. Dieser hohe Staudruck bewirkt einen "Staubsaugereffekt", der dazu führt, daß das zu trocknende Polymerpulver oder -agglomerat mit den abgeführten Brüden mitgerissen wird. Das Mitreißen läßt sich in den genannten Apparaten nur vermeiden, wenn der Mengendurchsatz drastisch abgesenkt oder aber das Verdampfen des Wassers oder des Lösungsmittels durch Anlegen eines Druckgradienten zeitlich und örtlich - im kontinuierlichen Betrieb - gestreckt wird. Die Verminderung des Durchsatzes ist unwirtschaftlich, die Anwendung eines Druckgradienten führt zu einer höheren Trocknungstemperatur oder einer längeren Trocknungszeit und damit zu einer qualitativen Verschlechterung des Produktes z.B. durch thermische Schädigung, die sich in einem Viskositätsabbau und z.B. einer Verschlechterung der Farbzahl von PC, charakterisiert durch den sogenannten Yellowness-Index, bemerkbar macht.

Aus der Europäischen Offenlegungsschrift EP 267 531 A2 ist ein Eindampfverfahren für hochviskose Produkte bekannt. Das Verfahren wird zur Eindampfung von Kautschuklösungen angewandt. Dabei werden aus niedrigviskosen Polymerlösungen durch Aufkonzentrierung unter Entfernung des Lösungsmittels hochviskose Polymerlösungen (von 30 % auf 99 % Polymergehalt) hergestellt. In einer weiteren Variante wird in EP 267 531 A2 die Aufkonzentrierung der Kautschuklösung bis zum rieselfähigen Produkt beschrieben. Hierbei erfolgt keine Plastifizierung oder Verflüssigung von aus Lösung erhaltenen Feststoffen. In dem genannten Verfahren wird die Trocknungsenergie im wesentlichen thermisch durch Wandkontakte (z.B. mit der Behälterwandoberfläche) dem zu trocknenden Gut zugeführt.

Aufgabe der Erfindung war es, ein rationelles Trocknungsverfahren zu finden, das die Nachteile des Standes der Technik nicht aufweist und insbesondere eine kontinuierliche Trocknung bei hohem Mengendurchsatz an Polymeren ermöglicht.

Es wurde gefunden, daß es gelingt mit Hilfe modifizierter großvolumiger Mischapparate, z.B. geänderter ein- oder zweiwelliger Knetmaschinen entsprechend der Schriften EP 460 466 bzw. EP 528 210 A1, Polymerschmelzen z.B. von Polycarbonat (PC) oder ABS mit hoher Viskosität und bei wirtschaftlichem Durchsatz zu trocknen und zu verarbeiten, wenn die Rotoren, der Antriebsteil und insbesondere die an den Rotoren angebrachten Barren verstärkt werden. Außerdem muß das Standard-Drehzahlverhältnis, das z.B. bei zweiwelligen Mischern bei Gegendrall 1:4 beträgt, für den wirtschaftlichen Einsatz wegen des dann integral höheren Energieeintrags geändcrt werden z.B. auf bevorzugt 1:1.

Es wurde außerdem gefunden, daß die Entfernung von Restlösemitteln aus Polymerpulvern oder -agglomeraten, besonders von ABS oder PC, besonders wirkungsvoll und wirtschaftlich durch in einem Zweistufenprozeß, nämlich Abtrocknung der Lösemittelfeuchte durch Durchleiten von Wasserdampf und anschließender Trocknung des wasserfeuchten Pulvers oder der wasserfeuchten Agglomerate in der Schmelze, gelingt. Es wurde weiter gefunden, daß die Trocknung der bis zu 50 Gew.-% Wasser enthaltenden Polymerpulver oder -agglomerate in der Schmelze ein Polymergranulat mit besserer Farbzahl liefert als nach dem bisher üblicherweise angewandten Trocknungsprozeß, bei dem z.B. Polycarbonatpulver oder Polycarbonatagglomcrat in fester Phase durch Trocknung, z.B. in einem Kontakttrockner von Wasser- und Lösemittelfeuchte befreit und anschließend durch Extrusion in einem Extruder in Granulat überführt werden. Es wurde auch gefunden, daß der Trocknungsprozeß wirtschaftlich bei einer hohen Temperatur durchgeführt werden kann, ohne daß eine thermische Zersetzung des Polymeren, verbunden mit Verschlechterung seiner Eigenschaften, z.B. der Verschlechterung der Farbzahl oder einer Molekulargewichtsabnahme, zu beobachten ist. Es wurde außerdem gefunden, daß die Trocknung wegen der größeren Gasdurchlässigkeit der erfindungsgemäß eingesetzten Apparate mit hohem Durchsatz bei einem Feuchtegehalt bis 50 Gew.-% Wasser durchgeführt werden kann, ohne daß pulverförmige Partikel oder Tröpfchen mit dem Brüdenstrom mitgerissen werden.

Gegenstand der Erfindung ist ein Verfahren zur Trocknung von thermoplastischen Polymerpulvern oder -agglomeraten, insbesondere von Polycarbonat, Polyestercarbonat, Polyalkylenterephthalat, EPDM-Polymerisat, Polystyrol oder Polystyrol Co- bzw. Pfropfcopolymerisaten, unter Verflüssigen des Polymerpulvers oder Agglomerats, bei dem die wasser- oder lösemittelfeuchten oder wasser- und lösemittelfeuchten Polymerpulver oder -agglomerate mit einem Gehalt an Wasser von 1 bis 50 Gew.-%, bezogen auf das feuchte Polymerpulver und einen Gehalt an Lösemittel und Begleitstoffen bis 70 Gew.-%, gegebenenfalls nach einer Wasserdampfstrippung zur Entfernung wasserdampfflüchtiger organischer Lösemittel und Begleitstoffe, in einer Trockner- und Mischapparatur unter Verflüssigen des Polymeren getrocknet werden, bei dem ein Mischer verwendet wird, der mit rotierenden Einbauten zur mechanischen Abreinigung der Apparatewände und zum Stofftransport versehen ist, wobei das thermoplastische Polymer durch Beheizung des Gehäusemantels oder durch Beheizung der rotierenden Einbauten oder durch Beheizung von Gehäusemantel und der rotierenden Einbauten sowie durch die sich im zu trocknenden Gut bewegenden Einbauten verursachte Scherung unter gleichzeitigem Verflüssigen des Polymeren getrocknet wird,
und die Temperatur der Apparatewandbeheizung bzw. der Einbauten 150 bis 400°C beträgt,
bei dem die Trocknung bei einem Innendruck von 1 mbar bis 5 bar erfolgt, die Verweilzeit des Polymeren im Mischer 5 bis 90 Min. beträgt,
und bei dem der integrale Energieeintrag als auf den Austragsdurchsatz bezogene spezifische Knetenergie von 0,01 bis 1 kWh pro kg trockene Polymerschmelze beträgt.

Lösemittel für die thermoplastischen Polymere im Sinne der Erfindung sind alle organischen Lösungsmittel die das Polymer wenigstens zu 5 Gew.-% lösen, insbesondere Methylenchlorid, Chlorbenzol, Toluol, Tetrahydrofuran oder 1,3-Dioxolan sowie Mischungen der genannten Lösungsmittel, besonders bevorzgut Dichlormethan.

Begleitstoffe im Sinne der Erfindung sind beispielsweise Fällmittel wie aliphatische C₄-C₁₂-Kohlenwasserstoffe insbesondere Pentan, Hexan, Cyclohexan und Heptan oder auch nicht zu Polymer umgesetzte Restmonomere, insbesondere wie Styrol, Acrylnitril oder Butadien.

Geeignete thermoplastische Polymere, die nach dem erfindungsgemäßen Verfahren getrocknet werden können, sind z.B. Polycarbonat, Polyestercarbonat, Polyalkylenterephthalat, EPDM-Polymerisate, Polystyrol oder Polystyrol-Co- bzw. Pfropfcopolymere, z.B. mit Acrylnitril und Styrol wie insbesondere ABS.

Bevorzugte thermoplastische Polymere sind aromatisches Polycarbonat und ABS.

Thermoplastische, aromatische Polycarbonate, die im Sinne des erfindungsgemäßen Verfahrens eingesetzt werden, sind aromatische Homopolycarbonate, Copolycarbonate und Mischungen dieser Polycarbonate, die sich insbesondere von folgenden Diphenolen ableiten:

Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -sulfoxide, -sulfone und α,α'-Bis-(hydroxyphenyl)-diisopropylbenzole, sowie deren kernalkylierte und kernhalogenierte Verbindungen.

Geeignete Diphenole sind beispielsweise in den US-Patenten US 3 028 365, US 2 999 835, US 3 062 781, US 3 148 172 und US 4 982 014, in den deutschen Offenlegungsschriften DE 1 570 703 und DE 2 063 050, sowie in der Monographie "H. Schnell, Chemistry and Physics of Polycarbonates, Interscience Publishers, New York, 1964" beschrieben.

Bevorzugte Diphenole sind:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
α,α'-Bis-(4-hydroxyphenyl)-m-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methylcyclohexan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-1-phenyl-ethan,
2,2-Bis-(3,5-dimethyl-4-hydroxyphenyl)-2-phenyl-ethan,
2,2-Bis-(4-hydroxyphenyl)-2,2-diphenyl-ethan,
9,9-Bis-(4-hydroxyphenyl)-fluoren,
9,9-Bis-(3,5-dimethyl-4-hydroxyphenyl)-fluoren.

Besonders bevorzugte Diphenole sind z.B.:
2,2-Bis-(4-hydroxyphenyl)-propan,
2,2-Bis-(3,5-dimethyl-4-hydroxyphenyl)-propan,
1,1-Bis-(4-hydroxyphenyl)-cyclohexan,
1,1-Bis-(4-hydroxyphenyl)-1-phenyl-ethan,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-4-methylcyclohexan,
9,9-Bis-(3,5-dimethyl-4-hydroxyphenyl)-fluoren.

Insbesondere sind 2,2-Bis-(4-hydroxyphenyl)-propan, 1,1-Bis-(4-hydroxyphenyl)-3,3,5-trimethylcyclohexan und 1,1-Bis-(4-hydroxy-phenyl)-1-phenyl-ethan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol.-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise bei der Synthese der PC mitverwendet sein. Einige der verwendbaren Verbindungen sind beispielsweise :
1,3,5-Tris-(4-hydroxyphenyl)-benzol,
1,3,5-Tris-(4-(4-hydroxyphenylisopropyl)-phenyl)-benzol,
1,1,1-Tris-(4-hydroxyphenyl)-ethan,
2,6-Bis-(2-hydroxy-5'-methyl-benzyl)-4-methylbenzol,
2-(4-Hydroxyphenyl)-2-(2,4-dihydroxyphenyl)-propan,
Hexakis-(4-(4-hydroxyphenylisopropyl)-phenyl)-ortho-terephthalsäureester,
Tetrakis-(4-hydroxyphenyl)-methan,
1,4-Bis-((4',4"-dihydroxytriphenyl)-methyl)-benzol,
3,3-Bis-(4-hydroxyphenyl)-2-oxo-2,3-dihydroindol,
3,3-Bis-(4-hydroxy-3-methyl-phenyl)-2-oxo-2,3-dihydroindol.

Ferner geeignet sind die diesen Verbindungen entsprechenden Chlorkohlensäureester, sowie die Säuren oder bevorzugt die Säurechloride von mehr als 2-basigen aliphatischen oder aromatischen Carbonsäuren, also beispielsweise
2,4-Dihydroxybenzoesäure, bzw. 2,4-Dihydroxybenzoesäuredichlorid,
Trimesinsäure, bzw. Trimesinsäuretrichlorid,
Trimellithsäure, bzw. Trimellithsäuretrichlorid,
Cyanursäuretrichlorid,
wobei diese Verzweiger einzeln oder im Gemisch vorgelegt oder der Synthese portionsweise zugesetzt werden können.

Als Kettenabbrecher können bei der Polycarbonatsynthese Phenole, gegebenenfalls substituierte Phenole, deren Chlorkohlensäureester, Monocarbonsäuren, sowie deren Säurechloride, bevorzugt Cumylphenol, Phenol, p-tert.-Butylphenol und i-Octylphenol gegebenenfalls als Mischungen, mit den üblichen Verunreinigungen und Isomeren verwendet sein, wobei die Kettenabbrecher einzeln oder im Gemisch mit den Diphenolen vorgelegt oder der Synthese portionsweise zugesetzt werden können.

Die Herstellung der dem erfindungsgemäßen Trocknungsverfahren zugänglichen Polycarbonate bzw. Polycarbonatgemische kann z.B. nach den folgenden bekannten Methoden (vgl. H.Schnell, "Chemistry and Physics of Polycarbonates", Polymer Review, Vol IX, Seite 27 ff., Interscience Publishers, New York, 1964) erfolgen:

### 1. Nach dem Schmelzumesterungsverfahren:

In dem Schmelzumesterungsverfahren, wird unter Zugabe von Diphenylcarbonat in stöchiometrischen Mengen oder im Überschuß von bis zu 40 Gew.-%, unter stetiger destillativer Entfernung von Phenol und gegebenenfalls des Diphenylcarbonatüberschusses das Molekulargewicht aufkondensiert. Dieses Verfahren wird unter Verwendung üblicher Katalysatoren wie Alkalimetallionen, z.B. Li, Na, K, oder Übergangsmetallverbindungen, z.B. solchen auf Basis Sn, Zn, Ti, als einstufiges oder zweistufiges Verfahren, also mit einer eventuellen getrennten Aufkondensation der Oligomeren und des Polymeren, durchgeführt.

### 2. Nach dem Lösungsverfahren in disperser Phase, sogenanntes "Zweiphasengrenzflächenverfahren":

Hierbei werden die einzusetzenden Diphenole in wäßriger alkalischer Phase gelöst. Dazu werden gegebenenfalls die zur Herstellung der erfindungsgemäßen Polycarbonate erforderlichen Kettenabbrecher in Mengen von 1,0 bis 20,0 Mol.-%, bezogen auf Mole Diphenol, in einer wäßrigen alkalischen Phase, vorzugsweise Natronlauge, gelöst, oder zu dieser und einer inerten organischen Phase, in Substanz zugegeben. Dann wird in Gegenwart einer inerten, vorzugsweise Polycarbonat-lösenden, organischen Phase mit Phosgen umgesetzt. Die Reaktionstemperatur liegt zwischen 0°C und 50°C.

Die Zugabe der erforderlichen Kettenabbrecher und Verzweiger kann auch während der Phosgenierung oder solange Chlorkohlensäureester in dem Synthesegemisch vorhanden sind, in Substanz, als Schmelze, als Lösung in Alkali oder inerten organischen Lösungsmitteln, zugegeben werden.

Die Reaktion kann durch Katalysatoren, wie tertiäre Amine oder Oniumsalze beschleunigt werden. Bevorzugt sind Tributylamin. Triethylamin und N-Ethylpiperidin.

Neben oder anstelle der Diphenole können auch deren Chlorkohlensäureester oder Bischlorkohlensäureester oder beide eingesetzt oder während der Synthese zudosiert werden.

Geeignete Lösungsmittel sind beispielsweise Methylenchlorid, Chlorbenzol, Toluol und deren Mischungen.

Die Isolierung der bevorzugt einzusetzenden Polycarbonate aus ihren Lösungen kann auch nach grundsätzlich bekannten Verfahren z.B. durch Sprühverdampfung oder Ausfällung erfolgen:

So wird in der Patentschrift US 3 508 339 die Verwendung einer speziellen Düse in Kombination mit einer Mischkammer, in der Polycarbonatlösung und Dampf vereinigt werden und einem sich anschließenden Rohr mit konstantem Durchmesser, in dem das Lösungsmittel abgetrocknet wird, beschrieben. Das erhaltene pulverförmige Agglomerat enthält Wasser und Restlösemittel, das durch Trocknung in der festen Phase entfernt wird. Ähnliche Verfahren zu pulverförmigen Agglomeraten werden in den Schriften US 4 568 418 und in EP 0 616 002 A1 (21.9.94) beschrieben.

Durch diese Verfahren werden Polycarbonatpartikel gewonnen, die vom organischen Lösungsmittel weitgehend befreit sind, aber einen Wassergehalt von ca. 40 Gew.-% aufweisen und deshalb für eine weitere Verwendung getrocknet werden müssen. Bei den üblichen Trocknungsverfahren werden Lösemittelreste und Wasserfeuchte durch Trocknung in fester Phase, z.B. in Kontakt-, Wirbelschicht-, oder Schachttrocknern entfernt. Die getrockneten Polycarbonate werden dann zu Granulat extrudiert und dieses Granulat, gegebenenfalls nach Zusatz von Additiven, Farbstoffen, Füllstoffen oder Glasfasern durch Spritzguß zu verschiedenen Artikeln in bekannter Weise verarbeitet.

Die Entfernung des Lösungsmittels kann beim erfindungsgemäßen Verfahren in einem vorgeschalteten Trocknungsprozeß auch vorteilhaft durch Durchleiten von Wasserdampf erfolgen.

Die Schmelze wird aus dem Trocknungsapparat mittels Schneckenextruder oder Zahnradpumpe gefördert und durch Durchpressen durch Düsen gegebenenfalls auch nach Siebung der Schmelze zur Entfernung von störenden Partikeln zu Strängen geformt und granuliert.

Die durch diesen kombinierten Prozeß nach dem erfindungsgemäßen Verfahren gewonnenen Granulate zeichnen sich durch einen extrem geringen Restlösungsmittelgehalt, gute Farbzahlen und eine hohe Schüttdichte aus. Der Trocknungsprozeß ist sehr wirtschaftlich, weil das Apparatevolumen durch die Überführung der voluminösen Pulver oder der voluminösen Agglomerate mit niedriger Schüttdichte in eine Schmelze mit hoher Dichte gering gehalten werden kann. Die Übertragung der für den Trocknungsprozeß erforderlichen Wärmemenge bei diesem Verfahren ist sehr günstig, weil eine große Temperaturdifferenz angewandt werden kann, ohne daß dies - wegen des Übergangs des zu trocknenden Gutes in die Schmelze - zur thermischen Zersetzung des Produktes führt.

Bei den erfindungsgemäß einzusetzenden Trocknungsapparaten besteht die eingangs erwähnte bei Extrudern beobachtete Gefahr des Mitreißens von Polymerpartikeln nicht, da es sich um großvolumige Apparate mit hoher Gasdurchlässigkeit der Einbauten und ausreichend großen Brüdenquerschnitten handelt.

Der Antriebsteil einschließlich der rotierenden Einbauten bei den erfindungsgemäß modifizierten Mischapparaten muß eine ausreichende mechanische Stabilität aufweisen, um die beim Plastifizieren auftretenden Scherkräfte und die im Verhältnis zu den Wandspielen bei großen Agglomeraten zusätzlich auftretenden Klemmkräfte zu beherrschen. Die Viskosität reiner Schmelzen z.B. von marktüblichem, mittelviskosen Polycarbonat beträgt bei einer Temperatur unter 300°C über 10.000 Pa·s. Durch eine nicht zu vermeidende und hier auch erwünschte Vermischung von Pulver bzw. Agglomerat und Schmelze bei einem kontinuierlichen Betrieb werden lokal hohe Belastungen, die sich durch Drehmomentspitzen bemerkbar machen, vermindert. Der integrale Energieeintrag als spezifische Knetenergie, bezogen auf den Austragsdurchsatz als getrocknete Schmelze, ist so hoch, daß er bisher nur in Apparaten wie z.B. Schneckenextrudern erreicht wurde, die wegen, wie bereits vorstehend ausgeführt, der hohen Staudrücke durch die Brüden nicht wirtschaftlich im Trocknungsverfahren eingesetzt werden können.

Das nach dem erfindungsgemäßen Trocknungsverfahren erhaltene Polymer liegt in Granulatform vor und kann direkt zu Formkörpern oder durch Spritzguß zu verschiedenen Artikeln in bekannter Weise verarbeitet werden. Gegebenenfalls können dem zu trocknenden Polymerpulver oder den zu trocknenden Polymeragglomeraten vor dem Trocknungsprozeß oder während des Trocknungsprozesses Additive, Farbstoffe, Füllstoffe oder Glasfasern zugesetzt werden.

Besonders Polycarbonaten kann während oder am Ende des Trocknungsprozesses, für meist nicht transparente Anwendungen, noch anderer Thermoplast in üblichen Mengen, d.h. z.B. von 10 bis 50 Gew.-%, bezogen auf das Polycarbonat, zugemischt werden.

Geeignete andere Thermoplaste sind beispielsweise, gegebenenfalls aromatische Polyestercarbonate, Polycarbonate auf Basis anderer Bisphenole als den obengenannten Polycarbonaten, Polyalkylen-terephthalate, EPDM-Polymerisate, Polystyrol und Polystyrol Co- und Pfropfcopolymerisaten mit Acrylnitril oder Acrylnitril und Butadien, wie insbesondere ABS.

Die Verwendung des getrockneten Polymergranulates erfolgt in üblicher Weise, beispielsweise auf dem Gebiet der Elektrotechnik, der Optik, im Fahrzeugbau und in der Beleuchtungsindustrie.

Beschreibung der im erfindungsgemäßen Verfahren einsetzbaren Trockenapparate: Ein z.B. in der Patentschrift US 5 407 266 beschriebenes Gerät wurde für den erfindungsgemäßen Einsatz geändert. Die auf den Wellen in Apparatelängsrichtung angeordneten, gemäß Patentanspruch 1 und 2 von US-5 407 266 U-förmig ausgebildeten Barren wurden wegen ihrer zu geringen mechanischen Stabilität für den erfindungsgemäßen Einsatz durch gerade Barren mit erheblich vergrößertem Querschnitt ersetzt. Außerdem wurde die produktseitige Winkelstellung der Barren von 90° für die U-förmigen alten Barren auf > 90° für die neuen geraden Barren verändert um die Schabwirkung der Barren zu erhöhen.

Die in EP 0 460 466 A1 sowie EP 0 528 210 A1 beanspruchten Apparate sind nach entsprechender Umrüstung ebenfalls grundsätzlich für den erfindungsgemäßen Einsatz geeignet. Die dort beschriebenen Konstruktionen erlauben eine modifizierte Barrenform mit einer ausreichenden Stabilität für den erfindungsgemäßen Einsatz.

Die nachfolgend beschriebenen Figuren stellen Beispiele der verwendeten modifizierten Mischapparaturen dar, die zur Durchführung des Verfahrens geeignet sind. In den Figuren zeigen:
- Fig. 1: eine schematische Darstellung einer Geräteanordnung zur Durchführung des erfindungsgemäßen Verfahrens
- Fig. 2: eine gegenüber der Anordnung nach Fig. 1 mit einem Austragsextruder ergänzte Trocknungsanordnung
- Fig. 3a: einen schematischen Schnitt durch einen Knetbarren eines bekannten Mischer/Trockners
- Fig. 3b: einen schematischen Schnitt durch einen im erfindungsgemäßen Verfahren eingesetzten verstärkten Knetbarren
- Fig. 4a: einen schematischen Querschnitt in Seitenansicht durch einen einwelligen Mischer für das erfindungsgemäße Verfahren
- Fig. 4b: einen schematischen Schnitt durch eine Schaberscheibe mit einem Barren entsprechend Fig. 4a unter Auslassung der weiteren Knetbarren.

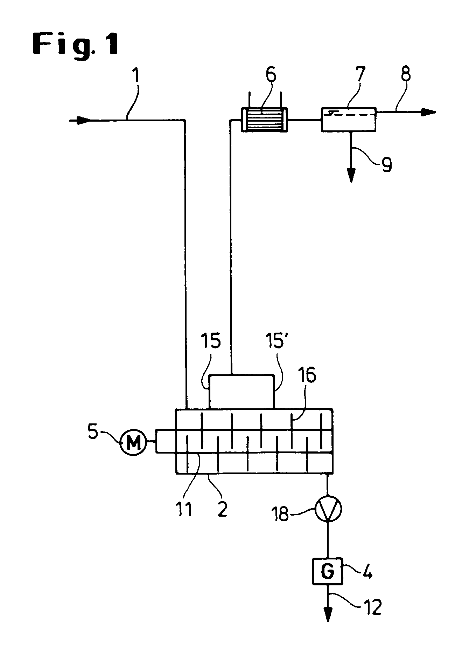

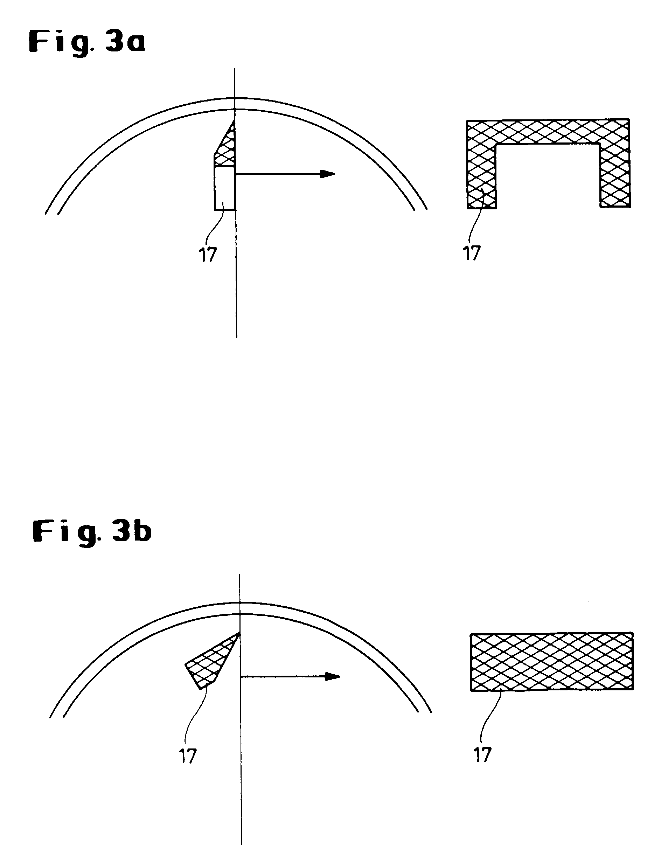

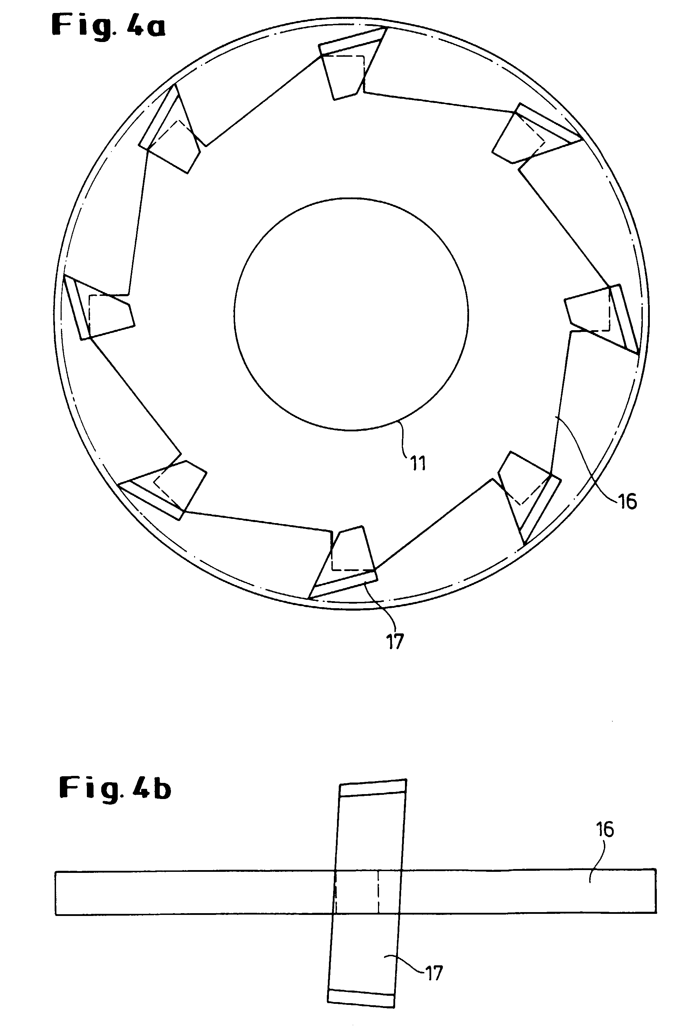

Fig. 1 gibt eine Anordnung zur Durchführung des erfindungsgemäßen Verfahrens schematisch wieder. Das Polymer-Agglomerat bzw. -pulver 1 wird dem Mischer 2 mit Antrieb 5, Wellen 11 und Knetscheiben 16 zudosiert. Lösungsmittel 9 und Wasser 8 werden über die Brüdenöffnungen 15, 15' entfernt, im Kondensator 6 ausgeschieden und im Abscheider 7 getrennt. Einen Querschnitt durch eine modifizierte Welle 11 mit einer Knetscheibe 16 und auf deren Umfang befindlichen verstärkten Knetbarren 17 zeigt Fig. 4a. In Fig. 4b ist die Draufsicht nur auf eine Knetscheibe 16 mit nur einem Knetbarren 17 wiedergegeben. Fig. 3a zeigt die Geometrie eines Knetbarrens 17 einer bekannten Vorrichtung in Seiten- und Vorderansicht. Fig. 3b zeigt einen erfindungsgemäß modifizierten Knetbarren 17 mit vergrößertem produktseitigem Anstellwinkel. Die Polymerschmelze wird über eine Pumpe 18 oder einen Austragsextruder 3, der mit Inertgaszuleitung 10 und Brüdenabzug 13 mit Pumpe 14 versehen ist, einem Granulator 4 zugeführt, in dem das Polymergranulat 12 erzeugt wird.

### Beispiele

### Beispiel 1

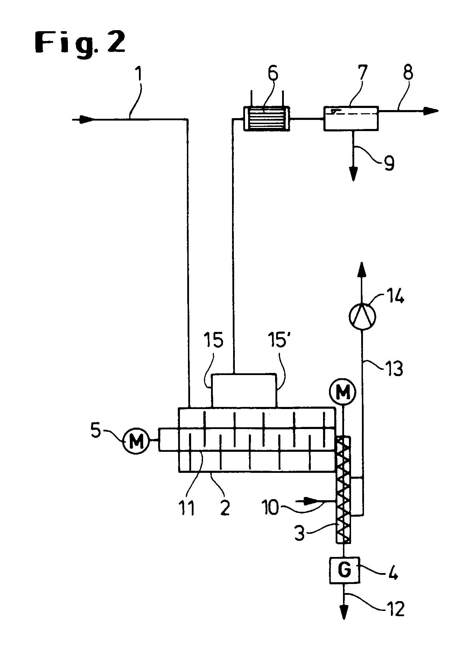

In die vordere Brüdenabzugsöffnung 15 (s. Fig. 2) eines Mischers 2 der Fa. LIST (Typ LIST AP 12) mit einem Volumen von 30 l, dessen Wellen 11 verstärkt wurden, wurden mittels Schüttelrinne 40 kg/h eines Polycarbonatagglomerats mit einem Wassergehalt von 42 Gew.-% dosiert, das nach dem in US-P 3 508 339 beschriebenen Verfahren aus einer Lösung von Polycarbonat (Makrolon® 2808, Bayer AG) in Methylenchlorid hergestellt und durch Wasserdampfstrippung vom Restlösemittel befreit wurde. Das Gehäuse und die Wellen 11 des Mischapparates 2 wurden mit einem Wärmeträgeröl, dessen Eingangstemperatur konstant auf 250°C gehalten wurde, beheizt. 20 Minuten nach Beginn der Dosierung der Agglomerate in den LIST-Apparat wurde kontinuierlich Schmelze mittels der Austragsschnecke 3 aus dem Apparat ausgetragen und durch eine Düse gepreßt. Der aus der Düse austretende Schmelzestrang wurde in einem Wasserbad abgekühlt und granuliert 4. Die nach vierstündigem Betrieb erhaltene Granulatprobe 12 wurde analysiert. Die Eigenschaften des Granulats sind in Tabelle 1 beschrieben.

### Beispiel 2

50 kg/h Polycarbonatagglomerat wurden wie unter Beispiel 1 beschrieben dosiert. Die Trocknung erfolgte wie unter Beispiel 1 beschrieben. Das Ausgangsmaterial enthielt hier 29 Gew.-% Wasser und 0,1 Gew.-% Dichlormethan. Die Eigenschaften des hier erhaltenen Granulats sind in Tabelle 1 beschrieben.

### Beispiel 3

30 kg/h Polycarbonatagglomerat wurden wie unter Beispiel 1 beschrieben dosiert und getrocknet. Das Ausgangsmaterial enthielt in diesem Fall 38 Gew.-% Wasser. Die Temperatur des Heizmediums der Apparateeinbauten und des Gehäuses wurde bei 280°C gehalten. Die Eigenschaften des hier erhaltenen Granulats sind in Tabelle 1 beschrieben.

### Beispiel 4

55 kg/h Polycarbonatagglomerat wurden wie unter Beispiel 1 beschrieben dosiert. Das Ausgangsmaterial enthielt 17 Gew.-% Wasser. Die Eigenschaften des hier erhaltenen Granulats sind in Tabelle 1 beschrieben.

### Beispiel 5

32 kg/h kristallines Polycarbonatpulver wurden wie unter Beispiel 1 beschrieben dosiert und getrocknet. Das Ausgangsmaterial enthielt 17 Gew.-% Wasser und 31,4 Gew.-% Dichlormethan. Die Temperatur des Heizmediums wurde konstant bei 290°C gehalten. Die Eigenschaften des hier erhaltenen Granulats sind in Tabelle 1 beschrieben.

### Vergleichsbeispiel 1

25 kg/h Polycarbonatagglomerat mit einem Wassergehalt von 42 Gew.-% und einem Dichlormethangehalt von 4,9 Gew.-%, die man wie unter Beispiel 1 zitiert nach dem Sprühverdampfungsverfahren aus Dichlormethanlösung gewonnen hatte, wurden kontinuierlich in einem Scheibentrockner bei einer Temperatur des Heizmediums von 120°C gewonnen und auf einem ZSK-Extruder extrudiert. Die erhaltenen Granulate zeigten die in der Tabelle 1 beschriebenen Eigenschaften.

### Vergleichsbeispiel 2

Das unter Beispiel 5 beschriebene kristalline Polycarbonatpulver wurde 4 Stunden bei 180°C in einem Vakuum-Trockenschrank bei einem Druck von 12 mbar getrocknet. Das getrocknete Pulver war teilweise zu Agglomeraten zusammengesintert. Nach Zerkleinerung dieser Agglomerate zu groben Stücken wurde das getrocknete Polycarbonat auf einem ZSK-Extruder extrudiert. Die erhaltenen Granulate zeigten die in der Tabelle beschriebenen Eigenschaften.

**Tabelle 1**

| | Wassergehalt vor Trocknung (Gew.-%) | Wassergehalt nach Trocknung (Gew.-%) | MC*-Restgehalt nach Trocknung (ppm) | Yellowness-Index YI | Viskositäts-Abbau (Δ rel. Viskosität) | Durchsatz feuchtes Polycarbonat (kg/h) |
|---|---|---|---|---|---|---|
| Beispiel 1 | 42,0 | <0,1 | <2 | 2,5 | <0,001 | 40 |
| Beispiel 2 | 29,0 | <0,5 | <2 | 2,8 | <0,001 | 50 |
| Beispiel 3 | 38,0 | <0,1 | <2 | 3,1 | <0,001 | 30 |
| Beispiel 4 | 17,0 | <0,1 | <2 | 2,1 | <0,001 | 55 |
| Beispiel 5 | 17,0 | <0,1 | <2 | 3,2 | <0,001 | 32 |
| Vergleichsbeispiel 1 | 42,0 | <0,1 | 4 | 6,3 | 0,005 | - |
| Vergleichsbeispiel 2 | 42,0 | <0,1 | <2 | 6,9 | 0,009 | - |

| | | | | | | |
|---|---|---|---|---|---|---|
| *MC = Methylenchlorid | | | | | | |

## Patentansprüche

1. Verfahren zur Trocknung von thermoplastischen Polymerpulvem oder -agglomeraten, insbesondere von Polycarbonat, Polyestercarbonat, Polyalkylenterephthalat, EPDM-Polymerisat, Polystyrol oder Polystyrol Co- bzw. Pfropfcopolymerisaten, unter Verflüssigen des Polymerpulvers oder Agglomerats, bei dem die wasser- oder lösemitelfeuchten oder wasser- oder lösemittelfeuchten Polymerpulver oder -agglomerate mit einem Gehalt an Wasser von 1 bis 50 Gew%, bezogen auf das feuchte Polymerpulver und einem Gehalt an Lösemittel und Begleitstoffen bis 70 Gew%, gegebenenfalls nach einer Wasserdampfstrippung zur Entfernung wasserdampfflüchtiger organischer Lösemittel und Begleitstoffe, in einer Trockner- und Mischapparatur unter Verflüssigen des Polymeren getrocknet werden, bei dem ein Mischer verwendet wird, der mit rotierenden Einbauten zur mechanischen Abreinigung der Apparatewände und zum Stofftransport versehen ist, wobei das thermoplastische Polymer durch Beheizung des Gehäusemantels oder durch Bcheizung der rotierenden Einbauten oder durch Beheizung von Gehäusemantel und der rotierenden Einbauten sowie durch die sich im zu trocknenden Gut bewegenden Einbauten verursachte Scherung unter gleichzeitigem Verflüssigen des Polymeren getrocknet wird,
und die Temperatur der Apparatewandbeheizung bzw. der Einbauten 150 bis 400°C beträgt,
bei dem die Trocknung bei einem Innendruck von 1 mbar bis 5 bar erfolgt, die Verweilzeit des Polymeren im Mischer 5 bis 90 Min. beträgt,
und bei dem der integrale Energieeintrag als auf den Austragsdurchsatz bezogene spezifische Knetencrgic von 0,01 bis 1 kWh pro kg trockene Polymerschmelze beträgt.

2. Verfahren nach Anspruch 1, bei dem die Polymerpulver oder -agglomerate einen Gehalt an Wasser von 5 bis 40 Gew% und einen Gehalt an Lösungsmitteln und Begleitstoffen von 0,1 bis 20 Gew% aufweisen.

3. Verfahren nach den Ansprüchen 1 bis 2, bei dem die Temperatur der Apparatewand bzw. der Einbauten 200 bis 300°C, bevorzugt 240 bis 280°C, beträgt.

4. Verfahren nach den Ansprüchen 1 bis 3, bei dem die Trocknung bei Normaldruck erfolgt, gegebenenfalls auch unter Zugabe von Inertgas oder Wasserdampf.

5. Verfahren nach den Ansprüchen 1 bis 4, bei dem die Verweilzeit des Polymeren im Mischer 5 bis 20 Min. beträgt.

6. Verfahren nach den Ansprüchen 1 bis 4, bei dem der integrale Energieeintrag von 0,05 bis 0,5 kWh pro kg trockene Polymerschmelze beträgt, bevorzugt von 0,1 bis 0,3 kWh/kg.

7. Verfahren nach den Ansprüchen 1 bis 6, bei dem das thermoplastische Polymer ein Acrylnitril-Butadien-Styrol-Copolymer (ABS) ist.

8. Verfahren nach den Ansprüchen 1 bis 6, bei dem das thermoplastische Polymer ein aromatisches Polycarbonat ist.

## Claims

1. A process for drying thermoplastic polymeric powders or polymeric agglomerates, in particular polycarbonate, polyester carbonate, polyalkylene terephthalate, EPDM polymer, polystyrene or polystyrene copolymers or graft copolymers, with liquefaction of the polymeric powder or agglomerate, wherein the polymeric powders or polymeric agglomerates which are moist from water or solvent, or moist from water and solvent, and have a water content of from 1 to 50 wt.%, referred to the moist polymeric powder, and a content of solvent and accompanying substances of up to 70 wt.%, optionally after a steam stripping in order to remove steam-volatile organic solvents and accompanying substances, are dried, with liquefaction of the polymer, in a drying and mixing apparatus, wherein a mixer is used which is provided with rotating baffles for the mechanical cleaning of the walls of the apparatus and for the transport of material, the thermoplastic polymer being dried as a result of the heating of the casing or the heating of the rotating baffles or the heating of the casing and of the rotating baffles and as a result of the shearing action caused by the baffles moving in the material to be dried, with simultaneous liquefaction of the polymer,
and the temperature for the heating of the apparatus walls and of the baffles is from 150 to 400°C,
wherein the drying taking place at an internal pressure of from 1 mbar to 5 bar, the residence time is from 5 to 90 minutes,
and wherein the integral energy input, as specific kneading energy referred to the discharged throughput, is from 0.01 to 1 kwh per kg of dried polymeric melt.

2. The process according to claim 1, wherein the polymeric powders or polymeric agglomerates have a water content of from 5 to 40 wt.% and a content of solvents and accompanying substances of from 0.1 to 20 wt.%.

3. The process according to claims 1 to 2, wherein the temperature of the wall of the apparatus and of the baffles is from 200 to 300°C, preferably from 240 to 280°C.

4. The process according to claims 1 to 3, wherein the drying is carried out at normal pressure, optionally also with the addition of inert gas or steam.

5. The process according to claims 1 to 4, wherein the residence time of the polymer in the mixer is from 5 to 20 minutes.

6. The process according to claims 1 to 4, wherein the integral energy input is from 0.05 to 0.5 kwh per kg of dry polymeric melt, preferably from 0.1 to 0.3 kWh/kg.

7. The process according to claims 1 to 6, wherein the thermoplastic polymer is an acrylonitrile-butadienestyrene copolymer (ABS).

8. The process according to claims 1 to 6, wherein the thermoplastic polymer is an aromatic polycarbonate.

## Revendications

1. Procédé pour le séchage de poudres ou agglomérats de polymères thermoplastiques, en particulier de polycarbonate, de polyester-carbonate, de téréphtalate de polyalkylène, de polymère EPDM, de polystyrène ou de copolymère ou polymère greffé du styrène, avec fluidification de la poudre ou des agglomérats de polymère, dans lequel la poudre ou les agglomérats de polymère contenant l'eau ou le solvant ou les deux, à une teneur en humidité de 1 à 50 % en poids par rapport à la poudre de polymère humide et une teneur en solvant et produits d'accompagnement allant jusqu'à 70 % en poids sont séchés dans un appareil de séchage et de mélange avec fluidification du polymère, le cas échéant après entraînement à la vapeur d'eau pour élimination du solvant et des produits d'accompagnement organiques volatils à la vapeur d'eau, dans lequel on utilise un mélangeur équipé d'éléments internes rotatifs pour nettoyage mécanique des parois d'appareil et pour transport de la matière, le polymère thermoplastique étant séché avec fluidification simultanée par chauffage de l'enveloppe de logement ou par chauffage des éléments internes rotatifs ou par chauffage des deux et par chauffage dû au cisaillement causé par les éléments internes en mouvement dans la matière à sécher,
et la température de chauffage des parois d'appareil et/ou des éléments internes est de 150 à 400°C,
le séchage étant réalisé à une pression intérieure de 1 mbar à 5 bar et la durée de passage du polymère dans le mélangeur étant de 5 à 90 min,
et l'apport intégral d'énergie, en énergie spécifique de malaxage rapportée à la production évacuée, étant de 0,01 à kWh/kg de polymère fondu sec.

2. Procédé selon la revendication 1, dans lequel la poudre ou les agglomérats de polymère ont une teneur en humidité de 5 à 40 % en poids et une teneur en solvant et produits d'accompagnement de 0,1 à 20 % en poids.

3. Procédé selon les revendications 1 à 2, dans lequel la température des parois d'appareil et des éléments internes est de 200 à 300°C, de préférence de 240 à 280°C.

4. Procédé selon les revendications 1 à 3, dans lequel le séchage est réalisé à pression normale, le cas échéant avec admission d'un gaz inerte ou de vapeur d'eau.

5. Procédé selon les revendications 1 à 4, dans lequel la durée de passage du polymère dans le mélangeur est de 5 à 20 min.

6. Procédé selon les revendications 1 à 4, dans lequel l'apport intégral d'énergie est de 0,05 à 0,5 kWh/kg de polymère fondu sec et de préférence de 0,1 à 0,3 kWh/kg.

7. Procédé selon les revendications 1 à 6, dans lequel le polymère thermoplastique est un copolymère acrylonitrile-butadiène-styrène (ABS).

8. Procédé selon les revendications 1 à 6, dans lequel le polymère thermoplastique est un polycarbonate aromatique.
